# FASCICULE DE BREVET EUROPEEN

(11) **EP 2 353 909 B1**
(45) Date de publication et mention de la délivrance du brevet: **10.09.2014**
(21) Numéro de dépôt: 11153410.3
(22) Date de dépôt: 04.02.2011
(51) Int. Cl.: B60J 10/08

(54) **Enjoliveur extérieur pour cadre de porte de véhicule automobile, et module d'étanchéité l'incorporant.**
Zierstreifen für den Türrahmen eines Kraftfahrzeugs und Dichtstreifenmodul mit einem solchen Zierstreifen.
Exterior trim for the door frame of an automotive vehicle and seal module including such exterior trim

(30) Priorité: 08.02.2010 FR 1000506
(43) Date de publication de la demande: 10.08.2011
(73) Titulaire: HUTCHINSON, 75008 Paris (FR)
(72) Inventeur: Baratin, Sylvain, 45120, CORQUILLEROY (FR)
(74) Mandataire: Bolinches, Michel Jean-Marie

(56) Documents cités:
- EP-A1- 0 654 371
- EP-B1- 1 232 887
- DE-A1- 3 442 241
- DE-A1- 19 940 316
- GB-A- 2 429 027
- US-A- 5 806 247
- US-A1- 2006 138 801
- US-A1- 2008 122 251
- US-B1- 6 260 254
- US-B1- 7 325 859

## Description

La présente invention concerne un enjoliveur extérieur pour cadre d'une porte vitrée latérale ou arrière d'un véhicule automobile, et un module d'étanchéité l'incorporant. L'invention s'applique notamment aux modules d'étanchéité pour profilés de coulisses extérieurs pour portes à cadre caché utilisés dans des véhicules automobiles.

De manière connue, les enjoliveurs extérieurs équipant des profilés d'étanchéité de type coulisse ou lécheur pour vitrage mobile d'un véhicule automobile remplissent une fonction de décoration ou d'aspect des profilés d'étanchéité qu'ils recouvrent et ces enjoliveurs, à l'instar des profilés d'étanchéité les recevant, sont généralement constitués de profilés rigides (typiquement métalliques ou en variante en un matériau thermoplastique rigide ou semi-rigide avec dans ce dernier cas une armature de renforcement) qui sont assemblés sur les profilés correspondants. Ces enjoliveurs extérieurs peuvent être fixés sur la caisse du véhicule, auquel cas on parle de « gouttière » ou de double étanchéité sur caisse, ou bien sur une porte du véhicule, s'agissant dans ce cas d'enjoliveurs extérieurs de cadre de porte, qu'ils soient verticaux ou horizontaux.

Parmi ces enjoliveurs extérieurs de coulisses pour portes à cadre caché, on distingue usuellement, pour les profilés extrudés :
- une première famille incluant les enjoliveurs qui sont fixés directement sur la feuillure du cadre de porte et sur lesquels sont rapportés la coulisse et la portion de double étanchéité,
- une seconde famille incluant les enjoliveurs qui sont fixés sur le cadre de porte et qui passent en outre à travers le profilé d'étanchéité faisant office de joint de double étanchéité et de coulisse, et
- une troisième famille incluant les enjoliveurs fixés sur le profilé formant coulisse, mais sans contact direct avec le cadre de porte.

Les enjoliveurs extérieurs selon cette première famille sont le plus souvent métalliques extrudés et maintenus sur la feuillure du cadre de porte par des agrafes métalliques rapportées, des vis ou des rivets « pop ». Un inconvénient majeur de ces enjoliveurs est qu'ils requièrent souvent des ré-usinages ou opérations en reprise (pliage pour mise en forme des extrémités, cintrage pour suivi du galbe du cadre, moulage pour gestion des extrémités si elles ne sont pas pliables dans le cas de l'acier), un ajout d'embouts et enfin un usinage pour l'aménagement des zones de fixation de ces agrafes.

D'autres inconvénients des enjoliveurs connus selon cette première famille résident dans l'opération de traitement de surface et/ou de peinture (pour l'aspect noir dit « grand brillant ») suivant l'aspect souhaité : chrome, noir grand brillant, mat, « canon de fusil », etc., dans leur coût de fabrication élevé, dans l'utilisation de l'aluminium ou de l'acier inoxydable pour éviter la corrosion (ce dernier matériau étant en effet difficile à plier aux extrémités), dans leur poids relativement élevé, et même dans la nécessité de collage de l'enjoliveur si sa forme est évolutive sur sa longueur.

Le document EP-B1-1 232 887 présente un enjoliveur extérieur pour porte à cadre caché moulé par injection d'un matériau thermoplastique, qui présente une section transversale sensiblement en forme de « T » et qui est par exemple monté à force via une portion de serrage en U qu'il comporte sur une feuillure plate de cadre de porte. Cette feuillure peut se terminer par une extrémité axialement externe en forme de pointe de flèche.

L'enjoliveur décrit dans ce document présente notamment l'inconvénient d'être difficile à mouler du fait des petites dimensions et de la continuité de sa portion de serrage en U. Un autre inconvénient de cet enjoliveur est qu'il ne permet pas de supporter à lui seul le profilé de double étanchéité sur caisse avec lequel il est simplement en contact.

Un but de la présente invention est de proposer un enjoliveur extérieur pour cadre d'une porte vitrée latérale ou arrière d'un véhicule automobile, qui permette de remédier à ces inconvénients, l'enjoliveur étant apte à être fixé directement sur une feuillure du cadre et étant destiné à maintenir sur ce cadre au moins un profilé d'étanchéité de type coulisse et un profilé de double étanchéité sur caisse, cet enjoliveur comprenant une portion de serrage sur la feuillure qui présente une section transversale sensiblement en U à deux jambes axiales longitudinales.

A cet effet, un enjoliveur selon l'invention est tel que qu'une pluralité de moyens d'accrochage mâles et/ou femelles sont formés de manière espacée sur la longueur de l'une au moins desdites jambes, ou jambe d'accrochage, en regard de l'autre jambe et sont conçus pour coopérer respectivement avec une pluralité d'éléments d'accrochage complémentaires femelles et/ou mâles formés de manière espacée sur la longueur de ladite feuillure, et tel que ces deux jambes sont toutes deux discontinues sur la longueur de l'enjoliveur en étant formées d'une pluralité de secteurs de jambes disposés en quinconce pour ces deux jambes, les secteurs de ladite jambe d'accrochage présentant chacun l'un desdits moyens d'accrochage.

On notera qu'un enjoliveur selon l'invention ainsi défini peut être monté suivant la direction globale Y (direction axiale) du véhicule le recevant via la feuillure supérieure de son cadre de porte concerné.

Avantageusement, lesdits moyens d'accrochage peuvent comprendre des parties en saillie vers ladite autre jambe et/ou des parties en creux ou évidées, ces moyens d'accrochage pouvant être formés en deçà de l'extrémité libre axialement intérieure de ladite jambe d'accrochage.

Selon une autre caractéristique de l'invention, ledit enjoliveur comporte une portion d'appui axialement extérieure comprenant l'âme de ladite portion de serrage en U et la prolongeant en l'un au moins de ses côtés, ou côté de coulisse, en lequel l'enjoliveur peut être destiné à appuyer sur ledit profilé de coulisse de préférence par au moins une patte longitudinale d'appui s'étendant axialement vers l'intérieur et conçue pour venir s'engager dans un renfoncement axial correspondant de ce profilé.

Avantageusement, ladite portion d'appui peut prolonger en outre ladite âme en un côté opposé audit côté de coulisse, ou côté de double étanchéité, en lequel l'enjoliveur est destiné à appuyer sur ledit profilé de double étanchéité, cet enjoliveur présentant sensiblement une forme de « π » en section transversale.

Selon une autre caractéristique de l'invention, ladite portion d'appui et au moins ladite autre jambe peuvent être moulées par mono- ou multi-injection d'un ou plusieurs matériaux thermoplastiques choisis dans le groupe constitué par les matériaux chargés à base de polymères thermoplastiques, d'élastomères thermoplastiques (TPE) et de leurs mélanges, et de préférence à base d'un polypropylène optionnellement chargé par du talc ou des fibres de verre ou bien à base d'un terpolymère acrylonitrile-butadiène-styrène (ABS) optionnellement mélangé à un polypropylène ou à un polycarbonate (PC).

Avantageusement, ladite portion d'appui peut présenter une face d'aspect axialement extérieure constituée d'au moins une couche d'un film et/ou d'un feuillard métallique qui est rapporté, par exemple par collage ou par clipage, ou bien formée d'un seul tenant avec ladite portion d'appui par surmoulage ou multi-injection.

En variante, la face d'aspect de la portion d'appui peut être obtenue par bain de chromage catalytique ou par peinture.

Selon un premier mode de réalisation de l'invention, ledit enjoliveur est moulé par mono-ou multi-injection d'un ou plusieurs matériaux thermoplastiques qui forme(nt) ladite jambe d'accrochage, ladite autre jambe et une portion d'appui axialement externe les reliant entre elle, cet enjoliveur étant formé d'un seul tenant sur une section transversale donnée.

Conformément à ce premier mode, lesdits moyens d'accrochage peuvent comprendre :
- une pluralité de languettes en saillie oblique par exemple rectangulaires, qui sont formées de manière espacée sur la face de ladite jambe d'accrochage en regard de ladite autre jambe et qui sont respectivement conçues pour coopérer par encliquetage avec des évidements (borgnes ou traversants) de ladite feuillure formant lesdits éléments d'accrochage, ou bien
- une pluralité d'évidements (borgnes ou traversants) par exemple rectangulaires formés de manière espacée à travers ladite jambe d'accrochage et qui sont destinés à être comblés par encliquetage par des languettes en saillie oblique formant lesdits éléments d'accrochage sur la face en regard de ladite feuillure.

Selon un second mode de réalisation non conforme à l'invention, ledit enjoliveur comporte :
- un corps externe d'enjoliveur de section transversale sensiblement en forme de « L » ou de « T » asymétrique, ce corps présentant une portion d'appui qui forme la base du « L » ou le sommet du « T » et qui est destinée à maintenir en place lesdits profilés de coulisse et de double étanchéité et une unique jambe destinée à recevoir ce profilé de double étanchéité, et
- une pluralité d'agrafes plastiques ou métalliques qui sont immobilisées de manière espacée contre et à l'intérieur du corps d'enjoliveur sur la longueur de ce dernier et qui présentent une branche supérieure et une branche inférieure définissant ensemble une pince de serrage sur ladite feuillure, ladite branche inférieure définissant ladite jambe d'accrochage de l'enjoliveur qui forme en relation avec la jambe du corps d'enjoliveur ladite portion de serrage de l'enjoliveur.

Conformément à ce second mode non conforme à l'invention, ladite branche supérieure de la pince formée par chaque agrafe peut définir une zone de maintien en butée de celle-ci dans ledit corps d'enjoliveur, cette zone de maintien étant sensiblement parallèle à ladite jambe de ce corps d'enjoliveur.

Toujours selon ce second mode non conforme à l'invention, ladite branche inférieure de chaque agrafe peut présenter une partie d'accrochage en saillie qui est incurvée vers ladite jambe du corps d'enjoliveur et qui est destinée à se coincer dans un évidement borgne ou traversant de ladite feuillure, qui est de préférence traversant.

En référence audit premier mode de réalisation de l'invention, on notera qu'un enjoliveur selon l'invention permet de remédier aux inconvénients susmentionnés de l'art antérieur relatifs au poids, au coût de fabrication et à l'aspect des enjoliveurs existants appartenant à la première famille précitée. Cet enjoliveur peut présenter des aspects variés suivant la réalisation, comme par exemple chrome, noir « grand brillant », noir mat, etc.

Cet enjoliveur de cadre étant avantageusement moulé par injection, il peut adopter une géométrie variable, longitudinalement ou latéralement, en particulier sur sa face visible, et peut se décliner en une ou plusieurs pièces sur les montants verticaux ou supérieurs des cadres de porte latérale avant ou arrière, à savoir sur le montant de baie ou « pied avant », sur le cadre supérieur avant (« pied-milieu » avant ou arrière), et sur le cadre supérieur de porte arrière ou « pied arrière ».

Cet enjoliveur selon l'invention peut également permettre de maintenir le profilé de double étanchéité, que ce dernier soit fabriqué par extrusion ou injection (simple ou multiple) en étant rapporté sur l'enjoliveur, ou bien qu'il soit directement intégré à l'enjoliveur par exemple par co-ou multi-injection.

Outre sa fonction d'aspect, un tel enjoliveur selon l'invention peut servir également à maintenir le ou les profilés de coulisse en combinaison ou non avec ladite feuillure de cadre de porte. L'un ou plusieurs de ces profilés de coulisse qui assure(nt) l'étanchéité entre le cadre de porte - via l'enjoliveur - et la vitre peut être :
- un ou des profilés extrudés et rapportés entre l'enjoliveur et le cadre de porte, ou bien
- au moins une lèvre d'étanchéité extrudée ou injectée qui est destinée à appuyer sur le vitrage de la porte et qui est accrochée à un bord inférieur saillant de l'enjoliveur, par exemple de type boule, obus ou harpon, par l'intermédiaire d'une zone d'accroche en « C » de ladite au moins une lèvre, ou encore
- au moins une lèvre d'étanchéité qui est destinée à appuyer sur le vitrage de ladite porte et qui est liée d'un seul tenant à un bord inférieur de l'enjoliveur de préférence par l'intermédiaire d'un moulage par sur- ou co-injection avec l'enjoliveur.

Un module d'étanchéité selon l'invention comprend :
- un enjoliveur extérieur pour cadre de porte vitrée latérale ou arrière d'un véhicule automobile tel que défini ci-dessus, l'enjoliveur étant apte à être fixé directement sur une feuillure du cadre et étant destiné à maintenir sur ce cadre au moins un profilé d'étanchéité de type coulisse, et
- la feuillure qui comporte ladite pluralité d'éléments d'accrochage femelles et/ou mâles formés de manière espacée sur sa longueur et conçue pour coopérer avec ladite pluralité de moyens d'accrochage complémentaires mâles et/ou femelles formés sur la longueur de ladite au moins une jambe d'accrochage.

Selon un autre aspect de l'invention, ce module d'étanchéité est de type comportant en outre un profilé de double étanchéité sur caisse comprenant une base rigide qui est destinée à être en contact avec l'enjoliveur, et une partie d'étanchéité par exemple de type à lèvre(s) et/ou à tube qui est destinée à assurer l'étanchéité avec le dormant de la caisse. Selon l'invention, ce profilé de double étanchéité peut avantageusement être solidaire de l'enjoliveur en au moins une zone d'accrochage mécanique ou bien d'adhérence entre ladite base rigide et celle desdites jambes, ou jambe proximale, qui est adjacente à cette base.

Selon un exemple de réalisation de l'invention, ladite zone d'accrochage mécanique est formée aux extrémités axialement internes respectives de ladite base rigide et de ladite jambe proximale et est formée par l'extrémité axialement interne recourbée de cette base qui crochète un relief par exemple de type bourrelet de section circulaire ou oblongue ou bien de type harpon ou pointe de flèche.

Selon une variante de l'invention, ledit profilé de double étanchéité est solidaire de l'enjoliveur en deux zones d'accrochage mécanique respectivement formées par deux pattes axialement interne et externe continues ou discontinues, lesquelles pattes s'étendent sensiblement à angle droit à partir de la face de ladite jambe proximale qui est tournée vers ce profilé puis sont recourbées à l'opposé l'une de l'autre de sorte que cette jambe munie de ces pattes forme sensiblement un « π » en section transversale, ces deux pattes étant crochetées par les extrémités axialement interne et externe recourbées l'une vers l'autre de ladite base rigide qui est sensiblement en forme de « n » en section transversale.

Selon une autre variante de l'invention, ledit profilé de double étanchéité est solidaire de l'enjoliveur par une liaison adhérente obtenue de préférence par co-injection des matériaux constituant ce profilé avec celui ou ceux de ladite jambe proximale.

Selon une autre caractéristique de l'invention, ladite base rigide dudit profilé de double étanchéité peut reposer sensiblement à plat sur ladite jambe proximale de l'enjoliveur, ou bien s'écarter progressivement de cette jambe à partir de son extrémité axialement interne et jusqu'à son extrémité axialement externe, contre laquelle est monté l'enjoliveur, ledit profilé étant de préférence moulé par multi-injection de matériaux thermoplastiques.

On notera que ce montage à plat du profilé du double étanchéité sur l'enjoliveur confère une compacité accrue au module d'étanchéité selon l'invention, et qu'à l'inverse le montage de ce profilé avec cet écartement progressif permet de remplir l'espace entre le cadre de porte (via l'enjoliveur) et le dormant formé par le côté de caisse.

D'autres caractéristiques, avantages et détails de la présente invention ressortiront à la lecture de la description suivante de plusieurs exemples de réalisation de l'invention, donnés à titre illustratif et non limitatif, ladite description étant réalisée en référence avec les dessins joints, parmi lesquels :
la figure 1 est une vue schématique de face d'un enjoliveur extérieur selon l'invention pour coulisse à cadre caché d'un cadre de porte latérale de véhicule automobile,
les figures 2A et 2B sont des vues en section transversale de deux modules d'étanchéité selon l'invention comprenant chacun un enjoliveur selon ledit premier mode monté sur la feuillure d'un cadre de porte selon deux exemples de coopération de moyens et d'éléments d'accrochage formés sur une jambe supérieure de l'enjoliveur et sur cette feuillure,
les figures 3A et 3B sont des vues en section transversale de deux autres modules d'étanchéité selon ce premier mode de l'invention avec deux autres exemples de coopération entre moyens et d'éléments d'accrochage formés sur une jambe inférieure de l'enjoliveur et sur la feuillure,
la figure 4A est une vue agrandie en section transversale du module d'étanchéité de la figure 3B illustrant notamment un exemple de solidarisation mécanique du profilé de double étanchéité avec la jambe supérieure d'enjoliveur,
la figure 4B est une vue en section transversale d'un module d'étanchéité selon une variante de la figure 4A illustrant un autre exemple de solidarisation mécanique du profilé de double étanchéité avec la jambe supérieure d'enjoliveur,
la figure 4C est une vue en section transversale d'un module d'étanchéité selon une variante de la figure 4A s'en différenciant uniquement par une structure différente de la face d'aspect de l'enjoliveur,
la figure 4D est une vue partielle à la fois en coupe transversale et en perspective vue de dessous, d'un enjoliveur selon la figure 4A auquel est accroché le profilé de double étanchéité de cette figure 4A (partie d'étanchéité de ce profilé exceptée), cette figure 4D montrant notamment la structure de languettes ou « crevés » en saillie sur la jambe inférieure d'enjoliveur,
la figure 4E est une vue partielle à la fois en coupe transversale et en perspective vue de côté, d'un enjoliveur selon la figure 4D formé de plusieurs secteurs longitudinaux reliés entre eux,
la figure 5 est une vue agrandie du seul profilé de double étanchéité des figures 4A, 4C, 4D et 4E montrant notamment la structure multi matériaux de sa base rigide et de sa partie souple d'étanchéité,
la figure 6 est une vue partielle à la fois en coupe transversale et en perspective vue légèrement de côté, d'un module d'étanchéité toujours selon ledit premier mode mais suivant une variante de la figure 3A s'en distinguant notamment par la formation discontinue en quinconce des jambes supérieure et inférieure de l'enjoliveur et par le montage à plat du profilé de double étanchéité sur cette jambe supérieure,
les figures 6A et 6B sont des vues en section transversale de deux modules d'étanchéité selon ce premier mode de l'invention du type de celui de la figure 6, montrant notamment cet agencement en quinconce des deux jambes d'enjoliveur et les moyens et éléments d'accrochage selon la figure 3A pour la figure 6A (jambe inférieure ajourée), et selon la figure 2A pour la figure 6B (jambe supérieure ajourée),
la figure 6C est une vue en section transversale d'un module d'étanchéité selon ce premier mode de l'invention se différenciant essentiellement de celui de la figure 6A, en ce que la face d'aspect de l'enjoliveur est formée d'un film de décor ou feuillard métallique,
la figure 6D est une vue en section transversale d'un module d'étanchéité selon ce premier mode de l'invention montrant une variante de la figure 6C où ce film ou feuillard est collé ou serti sur cette face d'aspect ainsi que sur ses extrémités recourbées vers l'intérieur,
la figure 7A est une vue partielle en perspective montrant un exemple de structure discontinue en quinconce des deux jambes de l'enjoliveur selon les figures 6 à 6C, avec les évidements d'accrochage formés sur sa jambe inférieure,
la figure 7B est une vue partielle en perspective montrant un autre exemple d'enjoliveur selon la figure 6D, complétant la structure discontinue des jambes suivant la figure 7A par le sertissage local en des portions recourbées du feuillard de cette figure 6D,
la figure 8 est une vue en section transversale d'un module d'étanchéité selon le second mode non conforme à l'invention montrant une agrafe qui est bloquée à l'intérieur d'un corps d'enjoliveur et dont la branche inférieure forme la jambe inférieure de l'enjoliveur en venant s'accrocher dans un évidement de la feuillure, la face d'aspect de l'enjoliveur étant formée par un film ou feuillard du type des figures 6A à 6C et ce module incorporant un profilé de double étanchéité monté à plat sur la jambe supérieure de l'enjoliveur à l'instar des figures 6 à 6D,
la figure 8A est une vue en section transversale d'un module d'étanchéité selon ce second mode non conforme à l'invention, conformément à une variante de la figure 8 où la jambe supérieure de l'enjoliveur reçoit de manière écartée à l'instar de la figure 4B le profilé de double étanchéité, la branche inférieure de l'agrafe étant montrée ici dans deux positions respectivement hors et dans cet évidement de la feuillure,
la figure 8B est une vue en section transversale d'un module d'étanchéité selon ce second mode conformément à une autre variante de la figure 8 où le profilé de double étanchéité est formé d'un seul tenant avec l'enjoliveur par exemple par co-ou multi-injection, la branche inférieure de l'agrafe étant également montrée dans lesdites deux positions,
la figure 8C est une vue en perspective d'un enjoliveur du type de celui de la figure 8 dans lequel est montée une agrafe selon les figures 8 à 8B,
la figure 8D est une vue en perspective de cette agrafe selon les figures 8 à 8C,
la figure 9 est une vue en section transversale d'un module d'étanchéité selon le premier mode de l'invention conformément à une variante de la figure 3B, qui montre l'accrochage d'une lèvre d'étanchéité associée au profilé de coulisse sur l'enjoliveur, et
la figure 10 est une vue en section transversale d'un module d'étanchéité selon le premier mode de l'invention conformément à une variante de la figure 9, qui montre la formation d'un seul tenant avec l'enjoliveur d'une lèvre d'étanchéité associée au profilé de coulisse.

Dans ce qui suit, on utilisera de manière usuelle les qualificatifs « axialement interne » et « axialement externe » pour désigner la position d'un élément du module d'étanchéité vers l'intérieur et vers l'extérieur, respectivement, dans la direction axiale Y de la largeur du véhicule (cette direction horizontale transversale Y étant par définition perpendiculaire au plan XZ défini par les directions horizontale longitudinale X et verticale).

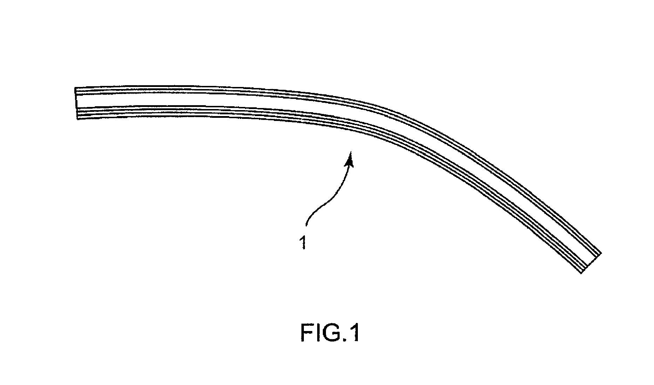

Le module 1 visible à l'exemple de la figure 1 est par exemple monté sur la porte latérale arrière du véhicule et incorporant en outre un profilé de double étanchéité sur caisse.

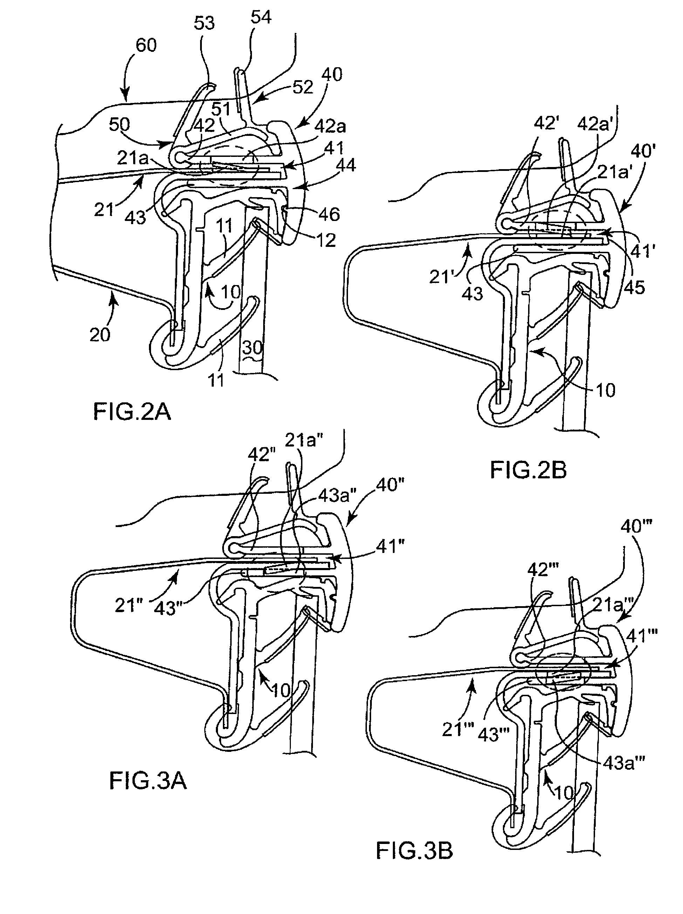

Comme visible aux figures 2A, 2B, 3A, 3B et 4A, un module d'étanchéité 1 selon le premier mode de l'invention comprend :
- au moins un profilé d'étanchéité 10 formant coulisse extérieure de type en U pour porte à cadre 20 caché, qui est destiné à appuyer élastiquement sur les deux faces d'un vitrage 30 de la porte via des lèvres souples d'étanchéité 11 (de préférence réalisées en matériau élastomère mono- ou multi-matière(s),
- un enjoliveur extérieur 40, 40', 40", 40"' du cadre 20, moulé par injection(s) d'un ou plusieurs matériau(x) thermoplastique(s), qui est fixé sur une feuillure supérieure 21, 21', 21', 21"' du cadre 20 et qui maintient sur ce cadre 20 ce profilé de coulisse 10, cet enjoliveur présentant sensiblement une forme de « π » en section transversale et comprenant essentiellement, d'une part, une portion de serrage 41, 41', 41", 41"' sur la feuillure de section en U à deux jambes axiales longitudinales 42, 42', 42", 42'" et 43, 43", 43"' et, d'autre part, une portion d'appui 44 axialement extérieure comprenant l'âme 45 de la portion de serrage 41 à 41 "' et la prolongeant en ses deux côtés, et
- un profilé de double étanchéité 50 vis-à-vis du dormant de la caisse 60, qui comprend une base rigide 51 destinée à être en contact avec l'enjoliveur 40 et une partie d'étanchéité 52 (dans cet exemple de type à lèvres 53 et 54) destinée à assurer l'étanchéité avec ce dormant 60, et qui est également maintenu sur le cadre de porte 20 par l'enjoliveur 40.

Plus précisément, la portion d'appui 44 de l'enjoliveur 40 à 40"' appuie sur le profilé de coulisse 10 par exemple via une patte longitudinale 46 s'étendant axialement vers l'intérieur et conçue pour s'engager dans un renfoncement axial 12 correspondant de ce profilé 10, et cette portion d'appui 44 appuie en outre sur le profilé de double étanchéité 50.

Dans l'exemple de la figure 2A, la jambe supérieure 42 de l'enjoliveur 40 présente, entre ses extrémités axialement interne et externe, des moyens d'accrochage sur la feuillure constitués d'évidements rectangulaires 42a qui sont formés à intervalles réguliers on non sur la longueur de l'enjoliveur 40 et dans lesquels viennent s'encliqueter des languettes 21a en saillie oblique vers le haut formées à la manière de crevés rectangulaires sur la longueur de la feuillure 21.

Dans l'exemple de la figure 2B, la jambe supérieure 42' de l'enjoliveur 40' présente des moyens d'accrochage sur la feuillure 21' constitués de languette obliques rectangulaires 42a' en saillie oblique vers le bas qui sont formées à intervalles réguliers ou non sur la longueur de l'enjoliveur 40' entre les extrémités axialement interne et externe de cette jambe 42', et qui viennent s'encliqueter dans des évidements rectangulaires 21 a' formés sur la longueur de la feuillure 21'.

Dans l'exemple de la figure 3A, la jambe inférieure 43" de l'enjoliveur 40" présente, entre ses extrémités axialement interne et externe, des moyens d'accrochage sur la feuillure 21" constitués d'évidements rectangulaires 43a" qui sont formés à intervalles réguliers ou non sur la longueur de l'enjoliveur 40" et dans lesquels viennent s'encliqueter des languettes rectangulaires 21 a" en saillie oblique vers le bas formées sur la longueur de la feuillure 21" (en fonction de la compacité requise dans l'environnement géométrique immédiat du cadre de porte 20, on peut choisir de former ces languettes de feuillure 21 a ou 21 a" vers le haut comme à la figure 2A ou vers le bas comme à cette figure 3A).

Dans l'exemple de la figure 3B, la jambe inférieure 43"' de l'enjoliveur 40"' présente des moyens d'accrochage sur la feuillure 21'" constitués de languette obliques rectangulaires 43a"' en saillie oblique vers le haut qui sont formées à intervalles réguliers ou non sur la longueur de l'enjoliveur 40"' entre les extrémités axialement interne et externe de cette jambe 43"', et qui viennent s'encliqueter dans des évidements rectangulaires 21 a"' formés sur la longueur de la feuillure 21 "'.

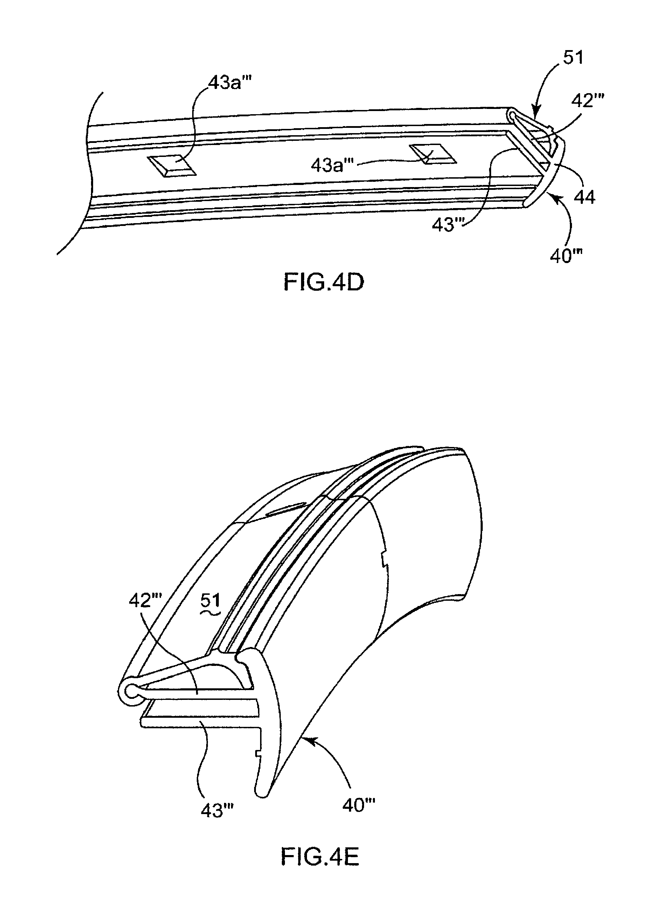

De telles languettes 43a"' formées à la manière de crevés sont illustrées à la figure 4D le long de cette jambe inférieure 43"', en référence à la figure 3B.

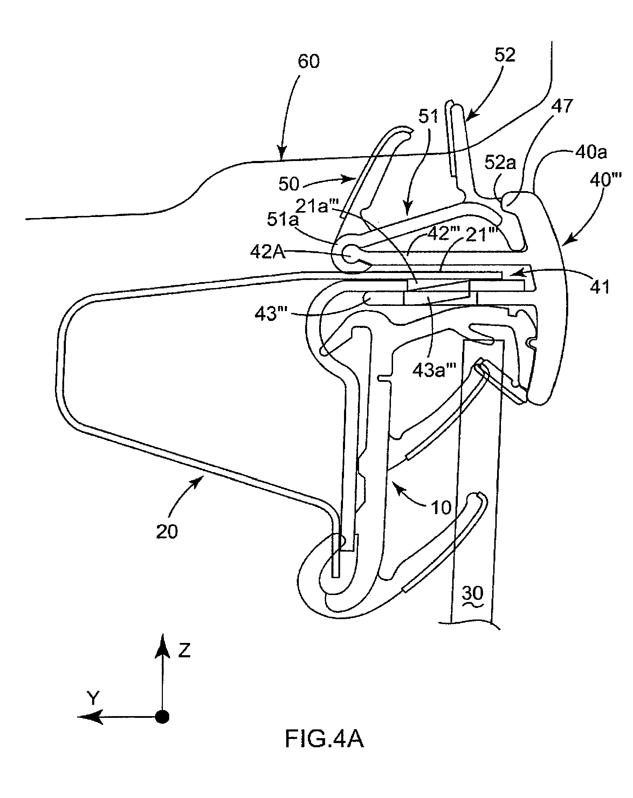

La figure 4A détaille, également pour ce mode de réalisation de la figure 3B, un exemple d'accrochage mécanique entre la base rigide 51 du profilé de double étanchéité 50 et la jambe supérieure 42'" de l'enjoliveur 40"', via le crochetage de l'extrémité axialement interne en forme de bourrelet 42A de la jambe 42'" par l'extrémité axialement interne recourbée 51a de la base 51, laquelle s'étend obliquement vers le bord supérieur 40a de l'enjoliveur 40"' qui appuie ainsi axialement sur ce profilé de double étanchéité 50. Ce profilé de double étanchéité 50 est en outre fixé à l'enjoliveur 40"' en une seconde zone d'accrochage, directement au dos du bord supérieur 40a, par une patte 47 en saillie axialement vers l'intérieur de ce bord 40a dans un logement 52a de la partie souple 52 du profilé 50, verrouillant ainsi sa position et son contact étanche sur l'enjoliveur 40"'.

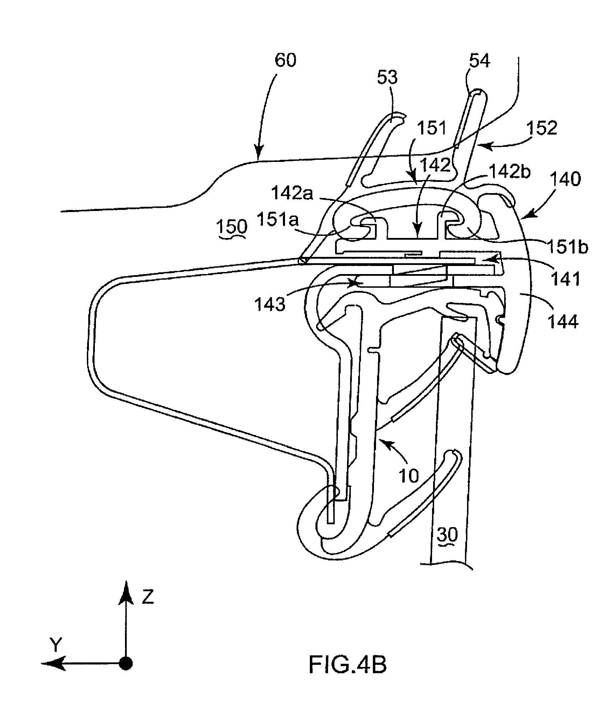

Le module selon la variante de la figure 4B se distingue uniquement de celui de la figure 4A, en ce que le profilé de double étanchéité 150 est solidaire de la jambe supérieure 142 de l'enjoliveur 140 par le double crochetage ou clipage selon la direction verticale Z de deux pattes 142a et 142b axialement interne et externe, qui s'étendent à angle droit à partir de la face supérieure de la jambe puis sont recourbées à l'opposé l'une de l'autre en formant sensiblement un « π » renversé en section transversale, crochetage réalisé par les extrémités axialement interne et externe 151a et 151 b recourbées l'une vers l'autre de la base 151 (laquelle est sensiblement en forme de « n » ou « Ω » en section transversale).

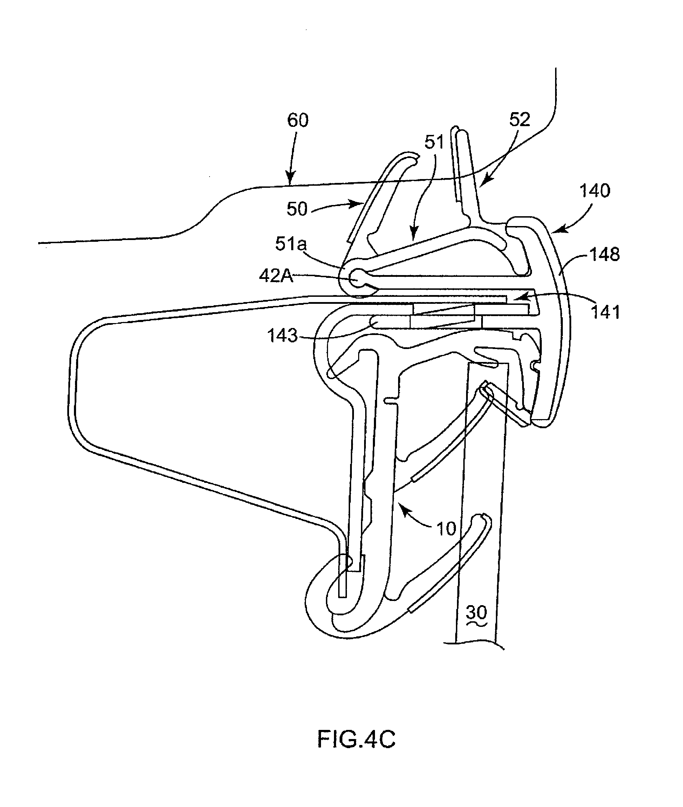

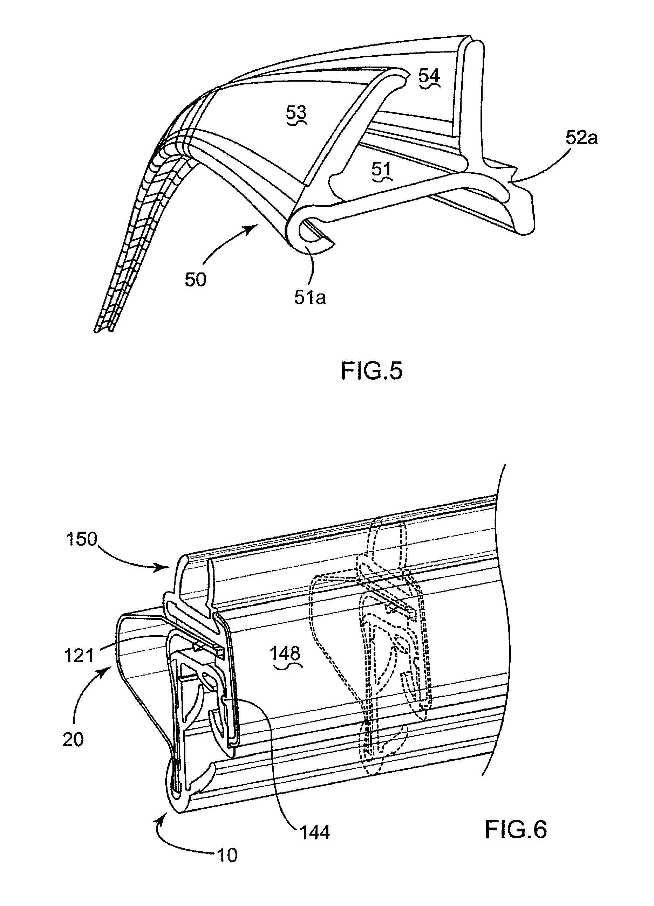

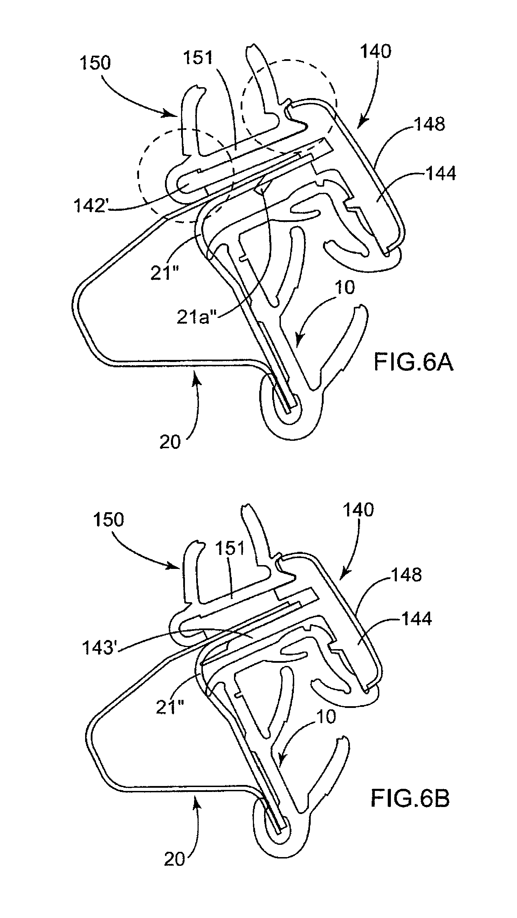

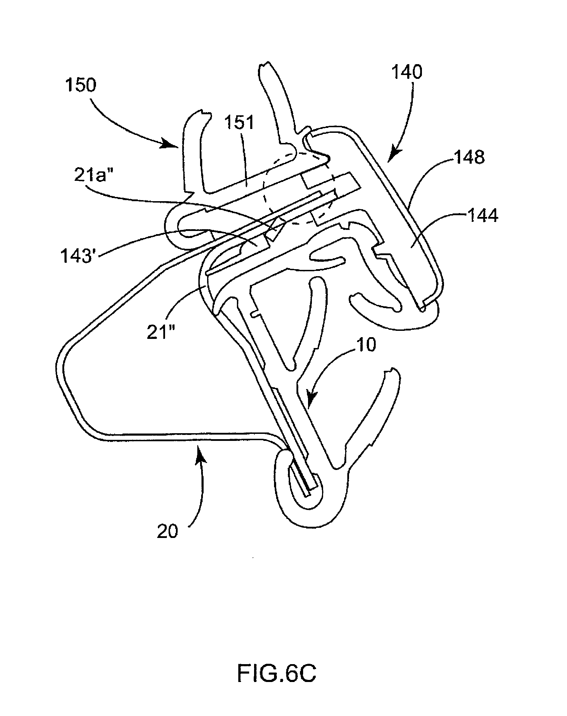

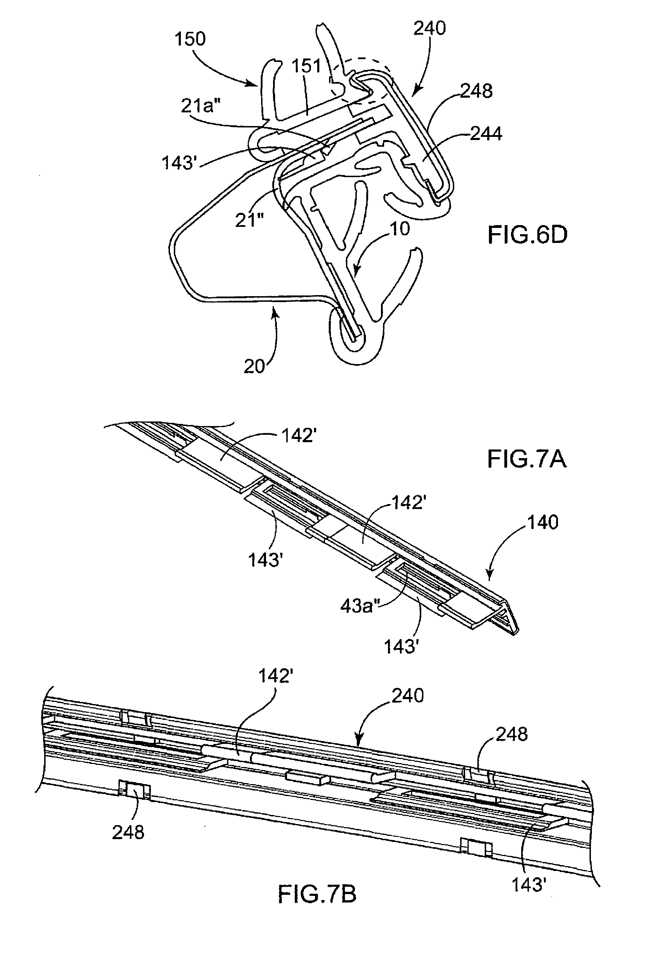

Le profilé de double étanchéité 50, 150 d'un module selon l'invention peut être fabriqué par extrusion (section longitudinale constante), ou par injection simple ou multiple (i.e. notamment la co-injection), l'injection permettant de conférer une forme évolutive de ce profilé 50, 150 sur sa longueur pour mieux épouser le dormant 60 (côté de caisse) et l'enjoliveur 40 à 140 sur tout le périmètre concerné. Ce profilé de double étanchéité 50, 150, suivant son environnement immédiat, peut avoir une forme au plus près de la jambe supérieure 42 à 142 de l'enjoliveur 40 à 140 en cas de très faible espace disponible (voir figures 6 à 6D), ou au contraire plus éloignée de cette jambe 42 à 142 pour se rapprocher progressivement de la paroi du côté de caisse 60 contre laquelle doit se faire l'étanchéité (voir figures 4A et 4C). Sa base rigide 51 à 151 peut être à base d'un EPDM de forte dureté Shore D, ou d'un polypropylène par exemple avec des charges de talc, de fibres de verre ou de chanvre, à des fractions massiques allant de 5 % à 60 % et de préférence entre 20 % et 30 %. Sa partie souple 52 à 152, tant de type à tube ou à lèvre(s) 53 et 54, peut être par exemple réalisée en un EPDM souple de type compact ou cellulaire, en un TPE souple de type TPS (e.g. SEBS) ou TPV souple (e.g. mélange d'un polypropylène/ EPDM) ou encore en un PVC, un élastomère styrénique ou un polyuréthanne, et cette partie souple 52 peut se prolonger autour de la zone d'accrochage 42A sur l'enjoliveur 40"' (voir figure 4A), afin d'assurer un contact sans vibration ou bruit parasite sur la feuillure 21"'. Bien entendu, les matériaux constitutifs du profilé de double étanchéité 50, 150 sont choisis en respectant les compatibilités des matériaux entre eux. Il est possible d'intégrer un revêtement glissant, tel qu'une colle éventuellement thermofusible additionnée d'un « flock », une bande « flockée », un film co-extrudé de PEHD (polyéthylène haute densité) ou de polypropylène haute dureté, d'un vernis, etc. Comme indiqué précédemment, on notera que le profilé de double étanchéité 50, 150 peut être co-injecté directement avec l'enjoliveur de cadre 40 à 140 pour l'obtention d'une liaison adhérente avec celui-ci.

D'une manière générale en référence au premier mode de l'invention, les deux jambes 42 à 142, 142' et 43 à 143, 143' de cette portion de serrage 41 à 141 peuvent être continues longitudinalement, comme visible à la figure 4D ou bien, suivant l'environnement auquel cette portion doit s'adapter et pour des facilités de réalisation du moule et du moulage, elles peuvent être discontinues et agencées en alternance sur la longueur de l'enjoliveur 40 à 140 (i.e. en quinconce, voir figures 6 à 7B), de sorte que sur une section transversale donnée une seule jambe 42 ou 43 à 142 ou 143 coopère par accrochage avec la feuillure 21 à 121. On voit notamment aux figures 6, 6A, 6C et 6D l'encliquetage d'une languette 21 a" de la feuillure 21" dans un évidement traversant rectangulaire 43a" de la jambe inférieure 143' discontinue, au-dessus de laquelle la jambe supérieure 142' est localement absente, comme visible aux figures 7A et 7B qui montrent cette structure ajourée de chaque tronçon de jambe inférieure 143' et au contraire la structure pleine de chaque tronçon de jambe supérieure 142'.

Concernant toujours cette portion de serrage de l'enjoliveur 40 à 140, on notera que sa forme globale de U peut se décliner en des resserrages locaux du U pour une tenue par points, et que l'on peut également aménager dans ce U de fine nervures longitudinales pour permettre la stabilité de la pièce une fois montée et éviter les mouvements et donc bruits parasites sur la feuillure du cadre 21 à 121. L'ensemble du contact entre l'enjoliveur 40 à 140 et la feuillure 21 à 121 est principalement géré par la déformation élastique du U de la portion de serrage 41 à 141, qui reste en contact avec la feuillure en tôle 21 à 121 grâce à la contrainte de déformation.

La portion de serrage 41 à 141 d'un enjoliveur 40 à 140 selon l'invention est réalisée dans une matière rigide, éventuellement chargée pour procurer de bonnes performances en tenue thermique (résistance à la dilatation thermique et au retrait observé après des cycles de vieillissement thermique au cahier des charge des constructeurs). Cette matière rigide peut par exemple être à base d'un polypropylène renforcé par du talc selon une fraction massique de 20 % ou par des fibres de verre selon une fraction massique de 30%, ou bien en variante un ABS (terpolymère acrylonitrile-butadiène-styrène) éventuellement mélangé à un polycarbonate.

Quant à la portion d'appui 44 à 144 de l'enjoliveur 40 à 140, elle peut être bombée pour respecter le style et le plan de forme du véhicule, visible de l'extérieur donc devant présenter une face d'aspect 148 satisfaisante. Le module selon la variante de la figure 4C se distingue de celui de la figure 4A uniquement par sa face d'aspect 148, sa portion de serrage 41 à 141 étant inchangée.

Cette face d'aspect 148 peut être inhérente à la matière employée pour l'injection de l'enjoliveur 40 à 140 pour les teintes comme le noir « grand brillant » ou le noir mat ; dans ce cas, la portion d'appui 44 à 144 peut présenter une matière spécifique en fine couche de 1/10 mm à 2mm, comme un polypropylène d'aspect ou un élastomère thermoplastique mat (tel qu'un mélange polypropylène/EPDM, un SEBS, par exemple).

Selon une première variante en particulier pour des teintes dites « chrome », l'aspect chromé peut être obtenu par bain catalytique ce qui est réalisable seulement avec certaines catégories de matière : ABS, ABS mélangé à un polypropylène, etc. L'enjoliveur 40 à 140 peut être dans ce cas intégralement injecté dans cette matière.

Selon une seconde variante, pour obtenir l'aspect « chrome », noir « grand brillant » ou tout autre couleur ou motif, la portion d'appui 144 reçoit une fine bande d'aspect 148 chrome ou selon la couleur ou le motif voulus. Cette bande peut être soit un film décor existant dans le commerce (voir figures 6A à 6C), soit un feuillard métallique en aluminium ou en acier inoxydable de 5/10 mm. Suivant le mode de réalisation, ce film ou ce feuillard 148 peuvent être :
- rapportés sur la portion d'appui 144 après l'injection de cette dernière (par fusion, collage ou même sertissage comme illustré aux figures 6D et 7B), ou bien
- intégrés dans le moule lors de l'injection de l'enjoliveur 140, réalisant ainsi une solidarisation par voie chimique (voir figure 6C : film avec une base compatible avec la matière injectée, tel qu'un polypropylène, ou feuillard métallique avec primaire) ou par voie physique (voir figures 6D et 7B : le feuillard métallique 248 présente des bords supérieurs et inférieurs recourbés l'un vers l'autre et des évidements que vient occuper la matière injectée).

Pour ce faire, et en particulier pour accompagner le galbe de l'enjoliveur 140, 240, cette fine bande d'aspect 148, 248 a été soit découpée en forme pour épouser ce galbe, soit cintrée au préalable à la fixation sur la portion d'appui 144, 244 ou dans le moule, soit elle a naturellement une souplesse suffisante pour accepter ce galbe sans mise en forme préalable.

A titre de film 148, on peut par exemple utiliser un film d'aspect chromé ou noir brillant dans le moule, ou un traitement de surface (par exemple de grainage).

Dans le cas de l'utilisation d'un feuillard 148, 248, sa fixation peut également être réalisée par collage ou clipage mécanique de manière continue ou discontinue (locale). Ce feuillard 148, 248 présente une forme globale en « C » associée à des rainures sur sa portion d'appui 144, 244 pour le montage. L'enjoliveur 140, 240 peut également comporter localement des pattes qui sont refermées sur l'enjoliveur pour assurer la fixation. On notera que ce feuillard 148, 248 rapporté peut être peint ou recouvert d'un film pour donner un aspect autre que chromé, et que le feuillard d'aspect 148, 248 peut également être extrudé en version aluminium; ce qui autorise des solutions de fixation sur l'enjoliveur 140, 240 avec des formes autres qu'en « C ». D'une manière générale, on peut utiliser un feuillard fin 148, 248 en aluminium ou en acier inoxydable (embouti ou extrudé) dans le moule ou bien rapporté par fixation mécanique ou collage.

On notera également qu'il est possible d'intégrer le « flock » de l'enjoliveur 40 à 240, au choix :
- dans le moule, via une bande « flockée » positionnée dans ce moule, ou bien
- en sortie de moule, par une bande rapportée ou par application suivant les procédés connus . (i.e. colle ou éventuellement thermofusible + « flock »).

On notera en outre qu'il est possible de remplacer le « flock » par un matériau à faible coefficient de frottement, qui est au choix :
- intégré dans le moule, sous forme d'un film glissant de type PEHD, par injection ou pulvérisation dans le moule d'une couche fine de matériau glissant (vernis ou polypropylène glissant ou encore un TPE glissant), ou bien
- rapporté lors d'une opération ultérieure (pulvérisation ou bande en PEHD, par exemple).

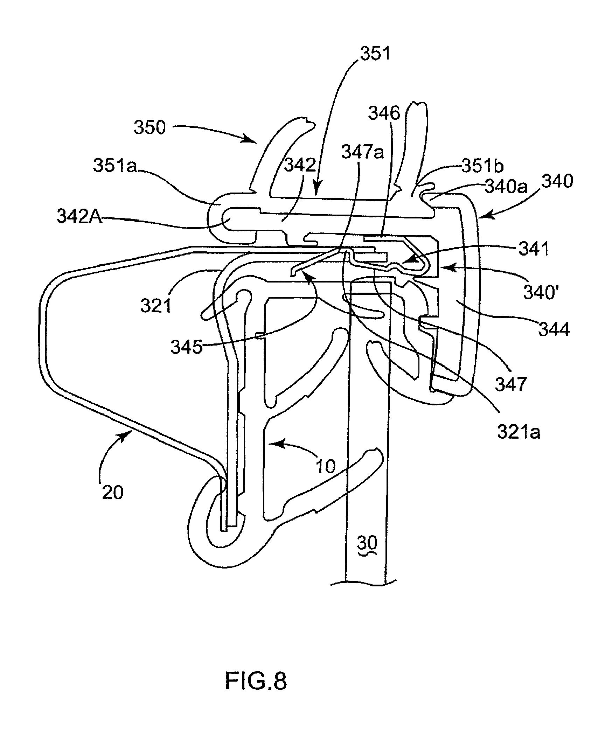

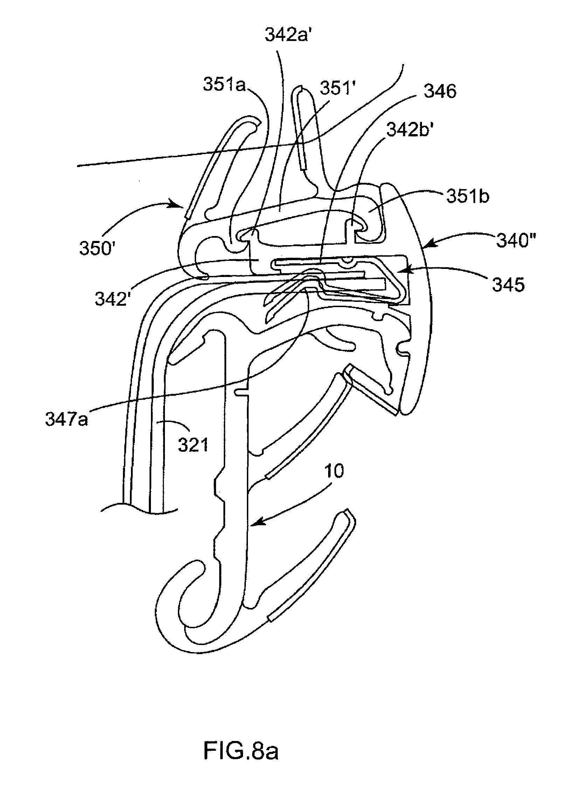

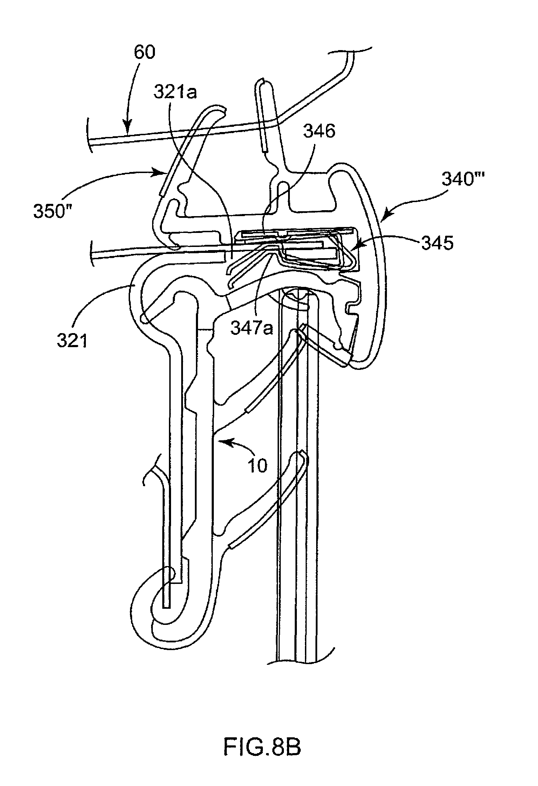

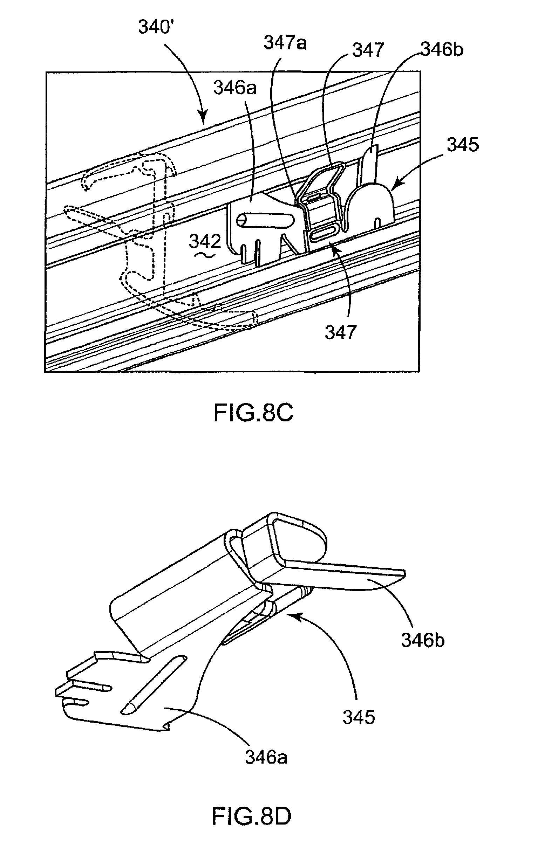

Dans le second mode non conforme à l'invention illustré aux figures 8 à 8D, l'enjoliveur de cadre 340 injecté en matériau(x) thermoplastique(s) peut présenter une forme générale de « L » en section transversale, et comporte : comporte :
- un corps externe d'enjoliveur 340' présentant une portion d'appui 344 qui forme la base du « L » et qui est destinée à maintenir en place les profilés de coulisse 10 et de double étanchéité 350, et une unique jambe 342 destinée à recevoir ce profilé de double étanchéité 350, et
- une pluralité d'agrafes plastiques ou métalliques 345 qui sont montées en butée de manière espacée à l'intérieur du corps d'enjoliveur 340' sur sa longueur et qui présentent une branche supérieure 346 et une branche inférieure 347 définissant une pince de serrage sur la feuillure 321 (cette pince est chaussée sur celle-ci dans la direction axiale Y du véhicule), la branche inférieure 347 - ou jambe d'accrochage de l'enjoliveur 340 - présentant une partie d'accrochage en saillie 347a qui est incurvée vers la jambe 342 et qui est destinée à se coincer dans un évidement traversant 321 a de la feuillure 321.

On voit aux figures 8, 8C et 8D que la branche inférieure 347 de chaque agrafe 345 forme en relation avec la jambe 342 du corps d'enjoliveur 340' la portion de serrage 341 de l'enjoliveur 340, et que la branche supérieure 346 de chaque agrafe 345 définit une zone de maintien 346a et 346b en butée de celle-ci dans le corps d'enjoliveur 340', cette zone de maintien 346a et 346b étant sensiblement parallèle à la jambe 342.

On voit également à ces figures que l'enjoliveur 340, 340", 340"' est pourvu d'un profilé de double étanchéité 350, 350', 350" qui est éventuellement formé d'un seul tenant par co-injection (voir figure 8B) et qui permet de maintenir le profilé de coulisse 10 en association avec le cadre de porte 320.

A l'instar de ce qui a été exposé ci-dessus pour le premier mode de l'invention, la fixation de ce profilé de double étanchéité 350, 350' sur l'enjoliveur 340, 340", 340"' peut être réalisée par accrochage mécanique, via :
- le crochetage de l'extrémité axialement interne en forme de bourrelet 342A de la jambe 342 par l'extrémité axialement interne recourbée 351a de la base 351 du profilé 350, et par le coincement du bord supérieur 340a de la portion d'appui 344 contre l'extrémité axialement externe 351 b de ce profilé 350 (voir figure 8) ; ou bien via
- le double crochetage de deux pattes 342a' et 342b' de la jambe 342', analogues aux pattes 142a et 142b de la figure 4B, par les extrémités axialement interne et externe recourbées l'une vers l'autre 351a et 351 b de la base rigide 351' du profilé de double étanchéité 350' (voir figure 8A).

On voit aux figures 8C et 8D un exemple de géométrie utilisable pour ces agrafes 345, avec notamment la portion de maintien 346 qui présente deux extrémités opposées 346a et 346b venant se coincer derrière un rebord supérieur du corps de l'enjoliveur 340', et la pince dont la branche inférieure 347 est courbée successivement vers cette portion de maintien 346 (en sa partie d'accrochage 347a) puis à l'opposé de celle-ci.

On notera que les agrafes 345 peuvent être collées sur la jambe 342 de l'enjoliveur 340 pour améliorer leur maintien, ou bien soudées sur cette jambe 342 (dans le cas d'agrafes plastiques). En variante, ces agrafes 345 peuvent être placées dans le moule d'injection de l'enjoliveur 340 (elles doivent alors présenter une zone permettant une accroche mécanique de la matière injectée).

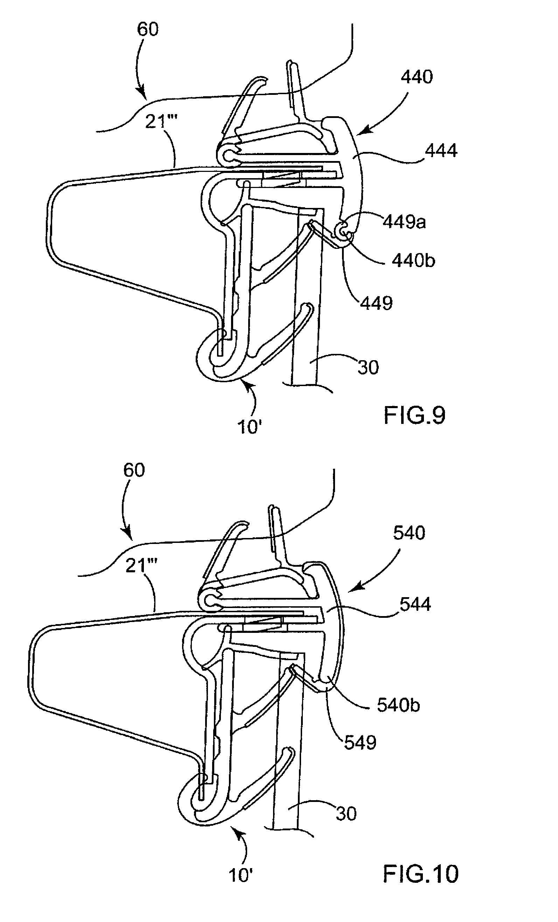

Comme illustré aux figures 9 et 10, l'enjoliveur 440, 540 peut être directement pourvu d'au moins un profilé ou lèvre d'étanchéité 449, 549 à appliquer sur la face externe du vitrage 30, en association avec un profilé de coulisse 10' également monté sur la feuillure 21"' (analogue dans cet exemple à celle de la figure 4A) appliqué de l'autre côté du vitrage 30.

Dans l'exemple de la figure 9, la portion d'appui 444 de l'enjoliveur 440 a un bord inférieur saillant 440b auquel est accrochée une telle lèvre d'étanchéité 449 extrudée ou injectée par l'intermédiaire d'une zone d'accroche en « C » 449a de la lèvre coopérant avec ce bord saillant 440b qui est dans cet exemple de type boule ou bourrelet.

Dans l'exemple de la figure 10, la portion d'appui 544 de l'enjoliveur 540 a un bord inférieur 540b auquel est lié d'un seul tenant une telle lèvre d'étanchéité 549 qui est de préférence moulée par sur- ou co-injection avec l'enjoliveur 540.

## Revendications

1. Enjoliveur extérieur (140, 240, 440, 540) pour cadre (20) d'une porte vitrée latérale ou arrière d'un véhicule automobile, l'enjoliveur étant apte à être fixé directement sur une feuillure (121, 21, 21', 21", 21"') du cadre et étant destiné à maintenir sur ce cadre au moins un profilé d'étanchéité de type coulisse (10, 10') et un profilé de double étanchéité sur caisse (150), l'enjoliveur comprenant une portion de serrage (141) sur la feuillure qui présente une section transversale sensiblement en U à deux jambes axiales longitudinales (42, 42", 142' et 43, 43", 143'),
**caractérisé en ce qu'**une pluralité de moyens d'accrochage mâles et/ou femelles (42a, 42a', 42a", 43a", 43a"') sont formés de manière espacée sur la longueur de l'une au moins desdites jambes, ou jambe d'accrochage (42, 43", 143'), en regard de l'autre jambe (43, 42", 142') et sont conçus pour coopérer respectivement avec une pluralité d'éléments d'accrochage complémentaires femelles et/ou mâles (21a, 21a', 21a", 21a"') formés de manière espacée sur la longueur de ladite feuillure, et **en ce que**
ces deux jambes sont toutes deux discontinues sur la longueur de l'enjoliveur en étant formées d'une pluralité de secteurs de jambes disposés en quinconce pour ces deux jambes, les secteurs de ladite jambe d'accrochage présentant chacun l'un desdits moyens d'accrochage.

2. Enjoliveur (140, 240, 440, 540) selon la revendication 1, **caractérisé en ce que** lesdits moyens d'accrochage (43a") comprennent des parties en saillie (42a', 43a"') vers ladite autre jambe (142') et/ou des parties en creux ou évidées (42a, 43a"), ces moyens d'accrochage étant formés en deçà de l'extrémité libre axialement intérieure de ladite jambe d'accrochage (143').

3. Enjoliveur (140, 240, 440, 540) selon la revendication 1 ou 2, **caractérisé en ce qu'**il comporte une portion d'appui (144, 244) axialement extérieure comprenant l'âme (45) de ladite portion de serrage (141) en U et la prolongeant en l'un au moins de ses côtés, ou côté de coulisse, en lequel l'enjoliveur est destiné à appuyer sur ledit profilé de coulisse (10) par au moins une patte longitudinale d'appui (46) s'étendant axialement vers l'intérieur et conçue pour venir s'engager dans un renfoncement axial (12) correspondant de ce profilé, et **en ce que** ladite portion d'appui (144, 244) prolonge en outre ladite âme (45) en un côté opposé audit côté de coulisse, ou côté de double étanchéité, en lequel l'enjoliveur est destiné à appuyer sur ledit profilé de double étanchéité (150), cet enjoliveur présentant sensiblement une forme de « π » en section transversale.

4. Enjoliveur (140, 240, 440, 540) selon la revendication 3, **caractérisé en ce que** ladite portion d'appui (144, 244) et au moins ladite autre jambe (142') sont moulées par mono- ou multi-injection d'un ou plusieurs matériaux thermoplastiques choisis dans le groupe constitué par les matériaux chargés à base de polymères thermoplastiques, d'élastomères thermoplastiques (TPE) et de leurs mélanges, et **en ce que** ladite portion d'appui (144, 244) présente une face d'aspect (148, 248) axialement extérieure constituée d'au moins une couche d'un film et/ou d'un feuillard métallique qui est rapporté ou formé d'un seul tenant avec ladite portion d'appui par surmoulage ou multi-injection.

5. Enjoliveur (140, 240, 440, 540) selon une des revendications précédentes, **caractérisé en ce qu'**il est moulé par mono-ou multi-injection d'un ou plusieurs matériaux thermoplastiques qui forme(nt) ladite jambe d'accrochage (143'), ladite autre jambe (142') et une portion d'appui (144, 244) axialement externe les reliant entre elle, cet enjoliveur étant formé d'un seul tenant sur une section transversale donnée.

6. Enjoliveur (140, 240, 440, 540) selon la revendication 5, **caractérisé en ce que** lesdits moyens d'accrochage comprennent une pluralité de languettes en saillie oblique (42a', 43a"'), qui sont formées de manière espacée sur la face de ladite jambe d'accrochage (143') en regard de ladite autre jambe (142') et qui sont respectivement conçues pour coopérer par encliquetage avec des évidements de ladite feuillure (21', 21"') formant lesdits éléments d'accrochage (21 a', 21 a"').

7. Enjoliveur (140, 240, 440, 540) selon la revendication 5, **caractérisé en ce que** lesdits moyens d'accrochage comprennent une pluralité d'évidements (42a, 43a") formés de manière espacée à travers ladite jambe d'accrochage (42, 43") et qui sont destinés à être comblés par encliquetage par des languettes en saillie oblique (21a, 21 a") formant lesdits éléments d'accrochage sur la face en regard de ladite feuillure (21, 21 ").

8. Enjoliveur (440) selon une des revendications 1 à 7, **caractérisé en ce qu'**il présente un bord inférieur saillant (440b) auquel est accrochée au moins une lèvre d'étanchéité (449) extrudée ou injectée destinée à appuyer sur un vitrage (30) de ladite porte, par l'intermédiaire d'une zone d'accroche en « C » (449a) de ladite au moins une lèvre coopérant avec ce bord saillant qui est de type boule, obus ou harpon.

9. Enjoliveur (540) selon une des revendications 1 à 7, **caractérisé en ce qu'**il présente un bord inférieur (540b) auquel est lié d'un seul tenant au moins une lèvre d'étanchéité (549) destinée à appuyer sur un vitrage (30) de ladite porte, ladite au moins une lèvre étant moulée par sur- ou co-injection avec l'enjoliveur.

10. Module d'étanchéité (1) comprenant :
- un enjoliveur extérieur (140, 240, 440, 540) pour cadre (20) d'une porte vitrée latérale ou arrière d'un véhicule automobile, l'enjoliveur étant apte à être fixé directement sur une feuillure (121, 21, 21', 21", 21"') du cadre et étant destiné à maintenir sur ce cadre au moins un profilé d'étanchéité de type coulisse (10, 10'), et
- ladite feuillure qui comporte ladite pluralité d'éléments d'accrochage femelles et/ou mâles (21 a, 21 a', 21 a", 21a"') formés de manière espacée sur sa longueur et conçue pour coopérer avec ladite pluralité de moyens d'accrochage complémentaires mâles et/ou femelles (42a, 42a', 42a", 43a", 43a"') formés sur la longueur de ladite au moins une jambe d'accrochage (42, 43", 143'),
**caractérisé en ce que** l'enjoliveur est tel que défini à l'une des revendications précédentes.

11. Module d'étanchéité (1) selon la revendication 10, de type comportant en outre un profilé de double étanchéité (150) comprenant une base rigide (51, 151) qui est destinée à être en contact avec l'enjoliveur, et une partie d'étanchéité (152) de type à lèvre(s) (53, 54) et/ou à tube qui est destinée à assurer l'étanchéité avec le dormant de la caisse (60), **caractérisé en ce que** ce profilé de double étanchéité est solidaire de l'enjoliveur en au moins une zone d'accrochage mécanique (42A, 142a et 142b) ou d'adhérence entre ladite base rigide et celle desdites jambes, ou jambe proximale (42, 142'), qui est adjacente à cette base, et **en ce que** :
(i) ladite zone d'accrochage mécanique est formée aux extrémités axialement internes respectives de ladite base rigide (51a) et de ladite jambe proximale (42, 142') et est formée par l'extrémité axialement interne recourbée de cette base (51a) qui crochète un relief (42A) de type bourrelet de section circulaire ou oblongue ou de type harpon ou pointe de flèche ; ou
(ii) ledit profilé de double étanchéité est solidaire de l'enjoliveur (140, 240, 440, 540) en deux zones d'accrochage mécanique respectivement formées par deux pattes axialement interne et externe (142a et 142b) continues ou discontinues, lesquelles pattes s'étendent sensiblement à angle droit à partir de la face de ladite jambe proximale (142) qui est tournée vers ce profilé puis sont recourbées à l'opposé l'une de l'autre de sorte que cette jambe munie de ces pattes forme sensiblement un « π » renversé en section transversale, ces deux pattes étant crochetées par les extrémités axialement interne et externe recourbées l'une vers l'autre (151 a et 151 b) de ladite base rigide (151) qui est sensiblement en forme de « ∩ » en section transversale ; ou encore
(iii) ledit profilé de double étanchéité (150) est solidaire de l'enjoliveur (140, 240, 440, 540) par une liaison adhérente obtenue par co-injection des matériaux constituant ce profilé avec celui ou ceux de ladite jambe proximale (42, 142').

12. Module d'étanchéité selon la revendication 11, **caractérisé en ce que** ladite base rigide (51, 151) dudit profilé de double étanchéité (150) repose sensiblement à plat sur ladite jambe proximale de l'enjoliveur, ou s'écarte progressivement de cette jambe (42, 142') à partir de son extrémité axialement interne (42A) jusqu'à son extrémité axialement externe, contre laquelle est monté l'enjoliveur (140, 240, 440, 540), ledit profilé étant moulé par multi-injection de matériaux thermoplastiques.

## Patentansprüche

1. Äußerer Zierrahmen (140, 240, 440, 540) für einen Rahmen (20) einer seitlichen oder hinteren Glastür eines Kraftfahrzeugs, wobei der Zierrahmen dazu ausgestaltet ist, direkt auf einem Falz (121, 21, 21', 21", 21'") des Rahmens befestigt zu werden und dazu bestimmt ist, an diesem Rahmen wenigstens ein Dichtungsprofil von Führungsschienentyp (10, 10') und ein Doppeldichtungsprofil an einer Karosserie (150) zu halten, wobei der Zierrahmen einen Abschnitt (141) zum Klemmen an dem Falz umfasst, welcher einen im Wesentlichen U-förmigen Querschnitt mit zwei longitudinalen, axialen Schenkeln (42, 42'', 142' und 43, 43", 143') aufweist,
**dadurch gekennzeichnet, dass** eine Vielzahl von männlichen und/oder weiblichen Einrastmitteln (42a, 42a', 42a'', 43a'', 43a''') auf über die Länge von wenigstens einem der Schenkel, bzw. Einrastschenkel (42, 43'', 143') beabstandete Weise gegenüber dem anderen Schenkel (43, 42'', 142') augebildet sind und dazu ausgestaltet sind, jeweils mit einer Vielzahl von komplementären weiblichen und/oder männlichen Einrastelementen (21a, 21a', 21a'' , 21a''') zusammenzuwirken, welche auf über die Länge des Falzes beabstandete Weise ausgebildet sind, und dass
diese zwei Schenkel beide diskontinuierlich über die Länge des Zierrahmen sind und ausbebildet sind aus einer Vielzahl von Schenkelsektoren, welche für diese zwei Schenkel versetzt angeordnet sind, wobei die Vektoren des Einrastschenkels jeweils eines der Einrastmittel aufweisen.

2. Zierrahmen (140, 240, 440, 540) nach Anspruch 1, **dadurch gekennzeichnet, dass** die Einrastmittel (43a") in Richtung des anderen Schenkels (142') vorstehende Abschnitte (42a', 43a''') und/oder vertiefte oder ausgesparte Abschnitte (42a, 43a'') umfassen, wobei diese Einrastmittel unterhalt des axial inneren freien Endes des Einrastschenkels (143') ausgebildet sind.

3. Zierrahmen (140, 240, 440, 540) nach Anspruch 1 oder 2, **dadurch gekennzeichnet**, das er einen axial äußeren Anschlagabschnitt (144, 244) umfasst, welcher den Steg (45) des U-förmigen Klemmabschnitts (41) umfasst und diesen an wenigstens einer seiner Seiten, bzw. Führungsschienenseite, verlängert, wobei der Zierrahmen dazu bestimmt ist, an dem Frührungsschienenprofil (10) durch wenigstens eine longitudinal Anschlaglasche (46) anzuliegen, welche sich axial in Richtung des inneren erstreckt und dazu ausgestaltet ist, in einer diesem Profil entsprechenden axialen Vertiefung (12) in Eingriff zu kommen, und dass der Anschlagabschnitt (144, 244) außerdem den Steg (45) auf einer zu der Führungsschienenseite entgegengesetzten Seite, bzw. Doppeldichtungsseite, verlängert, wobei der Zierrahmen dazu bestimmt ist, an dem Koppeldichtungsprofil (150) anzuliegen, wobei dieser Zierrahmen im Querschnitt im Wesentlichen eine "π"-Form aufweist.

4. Zierrahmen (140, 240, 440, 540) nach Anspruch 3, **dadurch gekennzeichnet**, das der Anschlagabschnitt (144, 244) und wenigstens der andere Schenkel (142') durch Mono- oder Multi-Spritzguss eines oder mehrerer thermoplastischer Masterialien geformt sind, welche ausgewählt sind aus der Gruppe, die gebildet ist aus gefüllten Materialien auf Basis von thermoplastischen Polymeren, thermoplastische Elastomere (TPE) und ihre Mischungen, und dass der Anschlagabschnitt (144, 244) eine axial äußere Blickseite (148, 248) aufweist, die gebildet ist aus wenigstens einer Schicht aus einer Folie und/oder einem Metallband, welches durch Überformung der Multi-Spritzguss angestückt ist in oder mit den Anschlagabschnitt einstückig ausgebildet ist.

5. Zierrahmen (140, 240, 440, 540) nach einem der vorhergehenden Ansprüche, **dadurch gekennzeichnet, dass** er durch Mono- oder Multi-Spritzguss eines oder mehrerer thermoplastischer Materialien genormt ist, welche(s) den Einrastschenkel (143'), den andern Schenkel (142') und den diese untereinander verbindenden axial äußeren Anschlagabschnitt (144, 244) bildet/bilden, wobei dieser Zierrahmen über einen gegebenen Querschnitt einstückig ausgebindet ist.

6. Zierrahmen (140, 240, 440, 540) nach Anspruch 5, **dadurch gekennzeichnet, dass** die Einrastmittel eine Vielzahl von schrägen, vorstehenden Laschen (42a', 43a'") umfassen, welche auf beabstandete Weise auf der Seite des Einrastschenkels (143') gegenüber dem anderen Schenkel (142') ausgebildet sind und welche jeweils dazu ausgestallet sind, durch Einrasten zusammenzuwirken mit Aussparungen des Falzes (21', 21'"), welche die Einrastelemente (21a', 21a'") bilden.

7. Zierrahmen (140, 240, 440, 540) nach Anspruch 5, **dadurch gekennzeichnet, dass** die Einrastmittel eine Vielzahl von Aussparungen (42a, 43a'') umfassen, welche auf quer über den Einrastschenkel (42, 43'') beabstandete Weise ausbebildet sind und welche dazu bestimmt sind, durch Einrasten von den schräg vorstehenden Laschen (21a, 21a"), welche die Einrastelemente auf der gegenüberliegenden Seite des Falzes (21, 21'') bilden, gefüllt zu werden.

8. Zierrahmen (440) nach einem der Ansprüche 1-7, **dadurch gekennzeichnet**, das er einen unteren vorstehenden Rand (440b) aufweist, an welchem wenigstens eine extrudierte oder gespritzte Dichtungslippe (449) befestigt ist, welche dazu bestimmt ist, an einer verglasung (30) der Tür anzuliegen, über einen "C"-förmigen Befestigungsbereich (449a) der wenigstens einen Lippe, welche mit diesem vorstehendem Rand zusammenwirkt, welcher von Kugel-, Granat- oder Harpunentyp ist.

9. Zierrahmen (540) nach einem der Ansprüche 1-7, **dadurch gekennzeichnet, dass** er einen unteren Rand (540b) aufweist, mit welchem einstückig wenigstens eine Dichtungslippe (549) verbunden ist, welche dazu bestimmt ist, an einer Verglasung (30) der Für anzuliegen, wobei die wenigstens eine Lippe durch Aufspritzen oder Co-Injektion mit dem Zierrahmen geformt ist.

10. Dichtungsmodul, umfassend:
- einen äußeren Zierrahmen (140, 240, 440, 540), für einnen Rahmen (20) einer seitlichen oder hinteren Glastür eines Kraftfahrzeugs, wobei der Zierrahmen dazu ausgestaltet ist, direkt an einem Falz (121, 21, 21', 21", 21"') des Rahmens befestigt zu werden und dazu bestimmt ist, an diesem Rahmen wenigstens ein Dichtungsprofil vom Führungsschienentyp (10, 10') zu halten, und
- die Falz, welche die Vielzahl von weiblichen und/oder männlichen Einrastelementen (21a, 21a', 21a'', 21a''') umfasst, welche auf über deren Länge beabstandete Weise ausgebildet sind und dazu ausgestaltet sind, mit der Vielzahl von komplementären männlichen und/oder weiblichen Einrastmitteln (42a, 42a', 42a'', 43a'', 43a''') zusammenzuwirken, welche über die Länge des wenigstens einen Einrastschenkels (42, 43'', 143') ausgebindet sind,
**dadurch gekennzeichnet, dass** der Zierrahmen so wie in einem der vorhergehenden Ansprüche definiert ist.

11. Dichtungsmodul (1) nach Anspruch 10, vom Typ umfassend außerdem ein Doppeldichtungsprofil (150), welches eine starre Basis (51, 151), die dazu bestimmt ist, im Kontakt mit dem Zierrahmen zu sein, und einen Dichtungsabschnitt (152) vom Typ mit Lippe(n) (53, 54) und/oder Röhrentyp, welcher dazu bestimmt ist, die Abdichtung mit der Einfassung der Karosserie (60) sicherzustellen, **dadurch gekennzeichnet, dass** dieses Doppeldichtungsprofil mit dem Zierrahmen fest verbunden ist in wenigstens einem Bereich zur mechanischen Befestigung (42A, 142a und 142b) oder zum Anhaften zwischen der starren Basis und demjenigen der Schenkel, bzw. proximalen Schenkel (42, 142'), welcher benachbart zu dieser Basis ist, und dass:
(i) der Bereich zur mechanischen Befestigung ausgebildet ist an jeweils axial inneren Enden der starren Basis (52a) und des proximalen Schenkels (42, 142') und gebildet ist durch das gekrümmte axial innere Ende dieser Basis (51a), welches ein Relief (42A) vom Wulsttyp mit kreisförmigem oder länglichem Querschnitt oder vom Harpunentyp oder Pfeiltyp greift; oder
(ii) das Doppeldichtungsprofil an zwei mechanischen Befestigungsbereichen mit dem Zierrahmen (140, 240, 440, 540) fest verbunden ist, welche gebildet sind durch zwei kontinuierliche oder diskontinuierliche axial innere bzw. äußere Laschen (142a und 142b), wobei die Laschen sich im Wesentlichen im rechten Winkel ausgehend von der Seite des proximalen Schenkels (142) erstrecken, welche in Richtung dieses Profils gewandt ist, und dann gegeneinander derart gekrümmt sind, dass der Schenkel, welcher mit diesen Laschen versehen ist, im Querschnitt im Wesentlichen ein umgekehrtes "π" bildet, wobei diese zwei Laschen von den gegeneinander gekrümmten axial inneren und äußeren Enden (151a und 151b) der starren Basis (151), welche im Querschnitt im Wesentlichen in Form eines "∩" ist, gegriffen werden oder wiederum
(iii) das Doppeldichtungsprofil (150) mit dem Zierrahmen (140, 240, 440, 540) fest verbunden ist durch eine Haftverbindung, welche erhalten ist durch Co-Injektion von dieses Profil bildenden Materialien mit demjenigen oder denjenigen des proximalen Schenkels (42, 142').

12. Dichtungsmodul nach Anspruch 11, **dadurch gekennzeichnet, dass** die starre Basis (51, 151) des Doppeldichtungsprofils (150) im Wesentlichen flach auf dem proximalen Schenkel des Zierrahmens ruht ober sich ausgehend von seinem axial inneren Ende (42A) bis zu seinem axial äußeren Ende fortschreitend von diesem Schenkel (42, 142') entfernt, an welchem der Zierrahmen (140, 240, 440, 540) angebracht ist, wobei das Profil durch Multi-Spritzguss von thermoplastischen Materialien genormt ist.

## Claims

1. Exterior trim (140,240,440,540) for a frame (20) of a glazed side or rear door of a motor vehicle, the trim being able to be attached directly to a rebate (121,21,21',21",21'") of the frame and being intended to hold on this frame at least one sealing profile strip of the glass run channel type (10, 10') and a double lip seal (150) for sealing against the bodyshell, the trim comprising a portion (141) for clamping onto the rebate which has a substantially U-shaped cross section with two longitudinal axial legs (42,42",142' and 43,43",143'),
**characterized in that** a plurality of male and/or female catching means (42a, 42a', 42a", 43a", 43a"') are formed spaced along the length of at least one of said legs, or catching leg (42, 43",143'), facing the other leg (43, 43, 42", 142') and are designed to cooperate respectively with a plurality of complementary female and/or male catching elements (21a, 21a, 21a", 21a'") formed spaced along the length of said rebate, and **in that**
these two legs are both discontinuous over the lengh of the trim by being formed of a plurality of leg sectors arranged in a staggered configuration of these two legs, the sectors of said catching leg each having one of said catching means.

2. Trim (140,240,440,540) according to claim 1. **characterized in that** said catching means (43a") comprise parts (42a', 43a"') protruding toward said other leg (142') and/or recessed or hollowed parts (42a, 43a"), these catching means being formed short of the axially inner free end of said catching leg (143').

3. Trim (140,240,440,540) according to claim 1 or 2, **characterized in that** it comprises an axially outer bearing portion (144,244) comprising the web (45) of said U-shaped clamping portion (141) and extending it at least on one of its sides, or glass run channel side, via which the trim is intended to bear against said glass run channel profile strip (10), via at least one longitudinal bearing lug (46) extending axially inward and designed to engage in a corresponding axial recess (12) of this profile strip, and **in that**
said bearing portion (144,244) further extends said web (45) on an opposite side to said glass run channel side, or double lip seal side, via which the trim is intended to bear against said double lip seal profile strip (150), this trim having substantially the shape of a "π" in cross section.

4. Trim (140,240,440,540) according to claim 3, **characterized in that** said bearing portion (144,244) and at least said other leg (142') are single-shot or multi-shot injection molded from one or more thermoplastic materials chosen from the group consisting of filled materials based on thermoplastic material polymers, thermoplastic material elastomers (TPEs) and mixtures thereof, and
**in that** said bearing portion (144, 244) has an axially outer fair face (148, 248) consisting of at least one layer of a film and/or of a metal foil which is added on or is alternatively formed as one piece with said bearing portion by overmolding or multi-shot injection molding.

5. Trim (140,240,440,540) according to one of the preceding claims, **characterized in that** it is molded by single-shot or multi-shot injection molding with one or more thermoplastic materials which forms(form) said catching leg (143'), said other leg (142') and an axially outer bearing portion (144,244) joining them together, this trim being formed as one piece over a given cross section.

6. Trim (140,240,440,540) according to claim 5, **characterized in that** said catching means comprise a plurality of obliquely protruding tabs (42a', 43a"') which are formed spaced apart over the face of said catching leg (143') facing said other leg (142') and which are respectively designed to cooperate by snap-fastening with cavities of said rebate (21', 21'") forming said catching elements (21a', 21a'").

7. Trim (140,240,440,540) according to claim 5, **characterized in that** said catching means comprise a plurality of cavities (42a, 43a") formed spaced apart through said catching leg (42, 43") and which are intended to be filled by snap-fastening by obliquely protruding tabs (21 a, 21 a") forming said catching elements on the opposing face of said rebate (21, 21").

8. Trim (440) according to one of claims 1 to 7, **characterized in that** it has a protruding lower edge (440b) on which is caught at least one extruded or injection-molding sealing lip (449) intended to press against a glazing (30) of said door, via a C-shaped catching region (449a) of said at least one lip cooperating with this protruding edge which is of the ball, bullnose or harpoon type.

9. Trim (540) according to one of claims 1 to 7, **characterized in that** it has a lower edge (540b) to which there is attached as a single piece at least one sealing lip (549) intended to press against a glazing (30) of said door, said at least one lip preferably being overmolded or co-injection molded with the trim.

10. Sealing module (1) comprising:
- an exterior trim (140,240,440,540) for the frame (20) of a glazed side or rear door of a motor vehicle, the trim being able to be attached directly to a rebate (121,21,21',21",21'") of the frame and being intended to hold on this frame at least one sealing profile strip of the glass run channel type (10, 10'), and
- said rebate which comprises said plurality of female and/or male catching elements (21a, 21a', 21a", 21a'") formed spaced along the length and designed to cooperate with said pluralité of complementary male and/or female catching means (42a, 42a', 42a", 43a", 43a"') formed along the length of said at least one catching leg (42, 43", 143'),
**characterized in that** the trim is as defined in one of the preceding claims.

11. Sealing module (1) according to claim 10, of the type further comprising a double lip seal profile strip (150) comprising a rigid base (51,151) which is intended to be in contact with the trim, and a sealing part (152), for example of the type having lip(s) (53, 54) and/or of the tube type which is intended to seal against the fixed frame of the bodyshell (60), **characterized in that** this double lip seal profile strip is secured to the trim at at least one region of mechanical attachment (42A, 142a and 142b) or of adhesion between said rigid base and the one of said legs, or proximal leg (42,142'), which is adjacent to this base, and **in that**
(i) said mechanical catching region is formed at the respective axially internal ends of said rigid base (51a) and of said proximal leg (42, 142') and is formed by the bent-back axially internal end of this base (51a) which catches on a relief (42A) of the bead of circular or oblong section type or alternatively of harpoon or arrowhead type; or
(ii) said double lip seal profile strip is secured to the trim (140, 240,440,540) at two mechanical catching regions respectively formed by two axially internal and external lugs (142a and 142b) which are continuous or discontinuous, which lugs extend substantially at right angles from that face of said proximal leg (142) which faces toward this profile strip and are then bent back away from one another so that this leg equipped with these lugs substantially forms an inverted "π" in cross section, these two lugs being caught by the axially internal and external ends (151a and 151b), which are bent toward one another, of said rigid base (151, 351') which is substantially in the shape of a "∩" in cross section, or else
(iii) said double lip seal profile strip (150) is secured to the trim (140,240,440,540) by an adhesive bond obtained by co-injection molding of the materials of which this profile strip is made with that or those of said proximal leg (42 to 342).

12. Sealing module according to claim 11, **characterized in that** said rigid base (51,151) of said double lip seal profile strip (150) rests substantially flat against said proximal leg of the trim, or alternatively diverges progressively from this leg (42,142') starting from its axially internal end (42A) as far as its axially external end, against which the trim (140,240,440,540) is mounted, said profile strip being molded by multi-shot injection molding of thermoplastic materials.
